Europäisches Patentamt

European Patent Office

Office européen des brevets

(19)

(11) EP 0 963 994 B1

(12) **EUROPÄISCHE PATENTSCHRIFT**

(45) Veröffentlichungstag und Bekanntmachung des Hinweises auf die Patenterteilung:
**23.08.2000 Patentblatt 2000/34**

(51) Int Cl.$^7$: **C07F 7/16**

(21) Anmeldenummer: **99101511.6**

(22) Anmeldetag: **28.01.1999**

(54) **Verfahren zur Herstellung von Organochlorsilanen**

Process for preparing organochlorosilanes

Procédé pour la préparation d'organochlorosilanes

(84) Benannte Vertragsstaaten:
**DE FR GB**
Benannte Erstreckungsstaaten:
**AL LT LV MK RO SI**

(30) Priorität: **09.04.1998 DE 19816149**

(43) Veröffentlichungstag der Anmeldung:
**15.12.1999 Patentblatt 1999/50**

(73) Patentinhaber: **Wacker-Chemie GmbH 81737 München (DE)**

(72) Erfinder:
• **Kalchauer, Wilfried, Dr.**
**84489 Burghausen (DE)**
• **Straussberger, Herbert**
**84561 Mehring/Öd (DE)**
• **Streckel, Willi**
**84561 Mehring/Öd (DE)**

(74) Vertreter: **Fritz, Helmut, Dr. et al**
**Wacker-Chemie GmbH,**
**Zentralabteilung Patente,**
**Marken und Lizenzen,**
**Hanns-Seidel-Platz 4**
**81737 München (DE)**

(56) Entgegenhaltungen:
**US-A- 4 966 986**

• **CHEMICAL ABSTRACTS, vol. 93, no. 9, 1. September 1980 Columbus, Ohio, US; abstract no. 95393n, LOBUSEVICH, N.P. ET AL.: "alkylchlorosilanes" XP002106845 & SU 2 080 869 A & OTKRYTIYA, IZOBRET., PROM. OBRAZTSY, TOVARNYE ZNAKI, Nr. 11, 1980, Seite 82**

**Beschreibung**

Die Erfindung betrifft ein Verfahren zur Direktsynthese von Methylchlorsilanen, bei dem zeitweise Chlorwasserstoff zugesetzt wird.

Bei der Müller-Rochow-Direktsynthese wird Methylchlorid mit Silicium in Gegenwart eines Kupferkatalysators und geeigneten Promotoren zu Methylchlorsilanen umgesetzt, wobei neben einer möglichst hohen Produktivität (Menge an gebildeten Silanen pro Zeiteinheit und eingesetztem Silicium) auch eine möglichst hohe Selektivität bezogen auf das Zielprodukt Dimethyldichlorsilan gefordert wird. Dimethyldichlorsilan wird beispielsweise für die Herstellung von linearen Polysiloxanen benötigt.

Trotz der hohen wirtschaftlichen Bedeutung der Direktsynthese sind deren naturwissenschaftlichen Hintergründe teilweise noch nicht erforscht. Nach Lieske et al. in Silicone for Chemical Industry, Geiranger-Norway, 16. - 18. June 1992 ist aufgrund der Teilnahme von drei Feststoffen an der Reaktion, nämlich Silicium, Katalysator und Promotoren, die Reproduzierbarkeit der Experimente oft schlecht. In der Praxis laufen unterschiedliche Ansätze der Direktsynthese trotz gleicher Stoff- und Reaktionsparameter mit unterschiedlichen Ergebnissen ab.

Die Direktsynthese kann diskontinuierlich oder kontinuierlich durchgeführt werden, in der industriellen Produktion wird nur die kontinuierliche Ausführungsform angewendet. Die kontinuierliche Direktsynthese wird in Wirbelschichtreaktoren durchgeführt, in denen Methylchlorid gleichzeitig als Fluidisierungsmedium und Reaktant eingesetzt wird. Das benötigte Silicium wird zuvor zu einem Pulver der Korngröße 20 bis 700 µm vermahlen und mit Kupferkatalysator und Promotoren zur Kontaktmasse vermischt.

Eine Produktionskampagne der kontinuierlichen Direktsynthese wird mit der Induktionsphase begonnen. Mit Beginn der Induktionsphase wird Methylchlorid in die erhitzte Kontaktmasse eingeleitet. Darauf folgt die Startphase, in welcher die Rohsilanbildung einsetzt. Die Reaktion läuft vorerst mit geringer Selektivität und Reaktivität ab. Anschließend wird die stabile Produktionsphase erreicht. Die Produktionskampagne endet, wenn kein Methylchlorid mehr in die Kontaktmasse eingeleitet wird.

Beim kontinuierlichen Betrieb eines Reaktors fallen in einer Produktionskampagne nach einer weitgehend stabilen Produktionsphase die Produktionsrate bezogen auf Methylchlorsilane und die Selektivität bezogen auf das Zielprodukt Dimethyldichlorsilan ab. Deshalb muß die Produktionskampagne nach einer bestimmten Zeit beendet werden. Eine Produktionskampagne dauert deshalb meist nur einige Tage bis mehrere Wochen.

Der Reaktor wird nach Beendigung einer Produktionskampagne entleert, neu mit Silicium, Kupferkatalysator und Promotoren befüllt und wieder auf Reaktionsbedingungen gebracht. Daraus ist ersichtlich, daß durch eine Steigerung der Produktionsrate wie auch durch eine zeitliche Verlängerung der Produktionskampagne bei gleichbleibender Selektivität die Wirtschaftlichkeit der Direktsynthese erhöht werden kann.

Die Aktivierung der Kontaktmasse vor der Umsetzung mit Methylchlorid durch eine Vorreaktion mit HCl ist bekannt. In beispielsweise US-A-4,864,044 ist ein Verfahren beschrieben, bei dem Silicium, Kupferkatalysator und gegebenenfalls Zinnpromotor jedoch in Abwesenheit von Zinkpromotoren bei ca. 325°C durch HCl aktiviert werden kann. Die Nachteile bei dieser Form der Aktivierung sind darin zu sehen, daß Zink bzw. Zinkverbindungen erst nach der Aktivierung zugesetzt werden, da Zink mit HCl unter den angegebenen Reaktionsbedingungen leicht sublimierbares Zinkchlorid bildet und somit während der Aktivierung aus der Kontaktmasse entfernt wird, daß die Aktivierung nur vor der eigentlichen Umsetzung mit Methylchlorid erfolgen kann, daß für die Aktivierung ein eigener Reaktor erforderlich ist, daß die Reaktionsprodukte aus der Aktivierung, insbesondere Trichlorsilan und Tetrachlorsilan unerwünschte Nebenprodukte der Methylchlorsilansynthese darstellen und daß durch die Aktivierung ca. 1 bis 2 % des eingesetzten Rohstoffes Silicium verbraucht werden.

Die Zudosierung von HCl zum Methylchlorid während der Direktsynthese ist beispielsweise aus US-A-4,966,986 bekannt. Dies führt zu einer erheblichen Veränderung in der Rohsilanzusammensetzung, wobei der Anteil an Methyldichlorsilan im Rohsilan erhöht wird. Dadurch wird aber gleichzeitig der Anteil an Dimethydichlorsilan erheblich reduziert.

Aufgabe der vorliegenden Erfindung war es, ein Verfahren zur Direktsynthese von Methylchlorsilanen nach Müller-Rochow bereitzustellen, bei dem unter Beibehaltung der Selektivität bezüglich Dimethyldichlorsilan die Produktivität erhöht werden kann.

Gegenstand der Erfindung ist ein Verfahren zur Direktsynthese von Methylchlorsilanen durch Umsetzung von Methylchlorid mit einer Kontaktmasse, welche Silicium, Kupferkatalysator, Zink-Promotoren und Zinn- und/oder Antimon-Promotoren enthält, bei dem während 1% bis 45 % der Dauer der Produktionskampagne Chlorwasserstoff zugesetzt wird.

Die Zudosierung von HCl kann während einer oder mehrerer der Phasen Induktionsphase, Startphase und Produktionsphase der Produktionskampagne erfolgen.

Durch die zeitlich limitierte Zudosierung von HCl während der Induktionsphase und/oder Startphase der Produktionskampagne kann die Reaktivität in der darauf folgenden Produktionsphase im Vergleich zur nicht aktivierten Kontaktmasse angehoben werden. Durch eine zeitlich limitierte Zudosierung von HCl während der Produktionsphase können fallende Reaktivitätswerte wieder angehoben werden, so daß in der darauf folgenden Phase ohne Zudosierung von HCl wieder höhere Reaktivitätswerte erreicht werden.

Während der zeitlich limitierten HCl-Dosierung steigt die Reaktivität, es sinkt aber die Selektivität an Dimethyldichlorsilan. Nach Beendigung der HCl-Zudosierung bleibt die Reaktivität erhöht und die Dimethyldichlorsilan-Selektivität steigt aber wieder mindestens auf den Wert wieder an, der vor der Zudosierung ermittelt wurde.

Erfolgt die Zudosierung von HCl während der Startphase, so wird nach der Zudosierung eine erhöhte Reaktivität und eine zumindest gleich hohe Selektivität im Vergleich zu einer nicht aktivierten Produktionskampagne erreicht. In einigen Fällen können auch höhere Selektivitätswerte gemessen werden.

Die geeignete Konzentration an HCl im Methylchlorid wie auch die Dauer der Zudosierung hängen stark vom augenblicklichen Zustand der Kontaktmasse in Bezug auf Reaktivität und Selektivität wie auch von den gewählten Reaktionsbedingungen ab.

Eine zu lange Dosierung von HCl und/oder eine zu hohe Konzentration an HCl im MeCl führen über die gesamte Produktionskampagne betrachtet zu einem erhöhten Anfall an nicht erwünschten Methylchlorsilanen wie z. B. Methyltrichlorsilan oder Methyldichlorsilan; eine zu kurze Dosierung von HCl und/oder eine zu geringe Konzentration an HCl im Methylchlorid liefern nur eine geringfügige Erhöhung der Reaktivität.

Die Konzentration an HCl im Methylchlorid beträgt während den Aktivierungsphasen bevorzugt mindestens 0,3 Gew.-%, insbesondere mindestens 0,5 Gew.-%, besonders bevorzugt mindestens 0,8 Gew.-% und bevorzugt höchstens 5 Gew.-%, insbesondere höchstens 3 Gew.-%, jeweils bezogen auf die Masse an Methylchlorid.

Die Dauer einer einzelnen HCl-Dosierung richtet sich danach, wie rasch das Reaktionssystem in Bezug auf die Reaktivitätsteigerung reagiert. Die Dauer kann vorzugsweise mindestens 5 Minuten, insbesondere mindestens 20 Minuten, besonders bevorzugt mindestens 25 Minuten und bevorzugt höchstens 10 Stunden, insbesondere höchstens 5 Stunden, besonders bevorzugt höchstens 2 Stunden betragen. Bezogen auf eine gesamte Produktionskampagne beträgt die Summe aller Zeiten, in denen HCl zudosiert wird, bevorzugt mindestens 3%, insbesondere mindestens 5%, besonders bevorzugt mindestens 10% und höchstens 45%, insbesondere höchstens 40%, besonders bevorzugt höchstens 30%.

Vorzugsweise erfolgen im Verlauf einer Reaktionskampagne mindestens 2, insbesondere mindestens 3 einzelne HCl-Dosierungen. Es können beispielsweise auch 10 oder mehr einzelne HCl-Dosierungen erfolgen.

Das Verfahren wird bevorzugt in einem Wirbelschichtreaktor, vorzugsweise im Temperaturbereich von 250 bis 400°C, insbesondere bei 250 bis 360°C durchgeführt. Weil dies den geringsten Aufwand erfordert, wird das Verfahren meist beim Druck der umgebenden Atmosphäre (also bei etwa 0,1MPa) bis 0,5 MPa durchgeführt, es können aber auch höhere Drücke angewandt werden.

Beim Verfahren können auch Inertgase wie beispielsweise Stickstoff oder Argon eingesetzt werden. Vorzugsweise wird kein Inertgas verwendet.

Die Menge des Gasstromes wird in einer bevorzugten Ausführungsform so gewählt, daß im Reaktor eine Wirbelschicht aus Kontaktmasse und Gas gebildet wird. Die Mischung aus Silicium, Katalysatoren und Promotoren wird als Kontaktmasse bezeichnet. Nicht umgesetztes Chlormethan und gegebenenfalls Inertgas und die gasförmigen Methylchlorsilane verlassen den Reaktor. Über einen oder mehrere Cyclone kann man, falls erwünscht, die mitgerissenen Partikel von Gasstrom abtrennen, wobei große mitgerissene Partikel aus der Kontaktmasse wieder in den Reaktor zurückgeführt werden.

Das Rohsilan wird anschließend von restlichen Staubanteilen und nicht umgesetztem Chlormethan abgetrennt und einer Destillation zugeführt. Gereinigtes, nicht umgesetztes Chlormethan kann wieder in den Reaktor eingespeist werden.

Die Zubereitung der Kontaktmasse erfolgt durch einfaches Mischen der Einzelkomponenten bei Raumtemperatur. Eine anschließende thermische Behandlung der Kontaktmasse ohne Anwesenheit von HCl vor dem Einbringen in den Reaktor ist möglich, wird aber in der bevorzugten Ausführungsform nicht durchgeführt.

Das Verfahren kann kontinuierlich oder diskontinuierlich durchgeführt werden. Kontinuierlich bedeutet, daß die Menge an abreagiertem Silicium und mit dem Reaktionsstaub ausgetragenen Katalysatoren und Promotoren laufend nachdosiert werden, vorzugsweise als vorgemischte Kontaktmasse.

Beim erfindungsgemäßen Verfahren wird in einer bevorzugten Ausführungsform Silicium in einer Korngröße von kleiner 700μm und größer 20μm, besonders bevorzugt in einer Korngröße von kleiner 500μm und größer 20μm eingesetzt. Das eingesetzte Silicium weist üblicherweise einen Reinheitsgrad von >98% auf.

Beim erfindungsgemäßen Verfahren wird a) Kupfer vorzugsweise in Form von Kupferoxid-Gemischen, in Form von Kupfer(II)oxid, in Form von CuCl oder in Form von $CuCl_2$ eingesetzt. Im Falle von Mischoxiden der allgemeinen Formel $CuO_x$ weist x einen Wert von 0,6 bis 1 auf, bevorzugt ist ein Wert von mindestens 0,7. Die beschriebenen Kupferoxide können beispielsweise nach dem in US 5,306,328 beschrieben Verfahren hergestellt werden, wobei der Oxidationsgrad durch die Trocknungstemperatur und die Verweilzeit bei dieser Temperatur gezielt eingestellt werden kann. Vorzugsweise werden 0,5 bis 10 Gew.%, insbesondere 0,7 bis 7 Gew.% Kupferkatalysator, bezogen auf metallisches Kupfer und Silicium verwendet, besonders bevorzugt sind 1 bis 5 Gew.%.

Beim erfindungsgemäßen Verfahren wird b) Zink vorzugsweise in Form von metallischem Zink, auch als Legierung mit Kupfer, Zinn und/oder Antimon, Zinkoxid,

oder -chlorid eingesetzt. Die Menge an eingesetztem Zink beträgt vorzugsweise 0,5 bis 60 Gew.%, insbesondere 2 bis 40 Gew.% Zn, bezogen auf Kupfer, besonders bevorzugt werden 5 bis 30 Gew.% Zn eingesetzt.

Beim erfindungsgemäßen Verfahren werden c) Antimon und/oder Zinn vorzugsweise als Metalle eingesetzt. Die Menge an eingesetztem Antimon oder Zinn beträgt bevorzugt 200 bis 8000 ppm, insbesondere 300 bis 4000 ppm, bezogen auf das eingesetzte Kupfer, besonders bevorzugt werden 500 bis 3000 ppm Antimon und/oder Zinn eingesetzt.

In den nachfolgenden Beispielen sind, falls jeweils nicht anders angegeben,

    a) alle Mengen auf die Masse bezogen;
    b) alle Drücke 0,10 MPa (abs.);
    c) alle Temperaturen 20°C;
    d) Silan M2 = Dimethyldichlorsilan

Die Ergebnisse bei der Umsetzung von Silicium mit Chlormethan in Gegenwart von geeigneten Katalysatoren hängen neben der Zusammensetzung der Kontaktmasse auch vom Aufbau der Versuchsanlage und der Versuchsdurchführung ab. Um die beiden letztgenannten Parameter zu eliminieren und um die Vorteile der Erfindung eindeutig aufzeigen zu können, wurden die in den Beispielen 1 bis 8 dargestellten Versuche nach folgender standardisierter Vorgehensweise durchgeführt.

Siliciumpulver:

Granulat der Fa. Fesil ASA, Norwegen; Korngröße im Bereich 70 bis 240μm.

Kupferoxid: Hergestellt nach US-A-5,306,328, Beispiel 5.

Alle anderen eingesetzten Chemikalien sind im Chemikalienhandel käuflich erhältlich, z.B. bei Fluka Chemie GmbH, Deutschland.

Versuchsanlage:

Labor-Wirbelschichtreaktor (senkrechtes Glasrohr mit einem Innendurchmesser von 25 mm und einer Höhe von 500 mm) mit Heizwicklung, Gasverteilungsfritte, Destillationsbrücke mit Solekühlung und Vorlagekolben.

Standardisierte Vorgehensweise:

120g Silicium, werden mit 6g Kupferoxid-Katalysator, 1g Zinkoxid und 8mg Zinnpulver innig vermischt, in den Reaktor gefüllt und unter einem Stickstoffstrom von 40 l/h auf 340°C erwärmt. Anschließend werden 40 l/h Methylchlorid durch den Reaktor geleitet und die Kontaktmasse auf 395°C erwärmt. Nach einer Induktionszeit im Bereich von 20 bis 30 Minuten beginnt die Silanbildung (Anspringzeit), die Reaktionstemperatur wird auf 360°C reduziert und 50ml Methylchlorsilane werden aufgefangen (Startphase). Alle in den Beispielen 3 bis 6 beschriebenen HCl Dosierungen erfolgten ausschließlich während der Induktionsphase/Startphase.

Produktionsphase: Anschließend werden weitere 30 ml Methylchlorsilane gesammelt. Die Zeit zur Bildung dieser 30 ml Silane wird als Produktionsphase bezeichnet, die Produktionsrate (PR2) errechnet sich nach der Formel

$$PR2 = \frac{\text{mg Methylchlorsilane in der Produktionsphase}}{\text{Oberfläche des Siliciums x Minuten in der Produktionsphase}}$$

Die Silanzusammensetzung der 30 ml Methylchlorsilane wurde mittels GC-Analyse in Gewichtsprozent ermittelt.

**Beispiel 1** (nicht erfindungsgemäß):

Vergleichsbeispiel für den Reaktionsverlauf einer nicht aktivierten/regenerierten Kontaktmasse. Durchführung entsprechend dem Standardverfahren ohne Zudosierung von HCl, Ergebnisse siehe Tabelle 1.

**Beispiel 2** (nicht erfindungsgemäß):

Nachweis, daß bei einer HCl-Zudosierung während des gesamten Reaktionsverlaufes die Selektivität an Silan M2 massiv reduziert wird. Durchführung entsprechend dem Standardverfahren mit der Änderung, daß während der ganzen Reaktionszeit dem Methylchlorid HCl in einer Menge von 3 l/h zudosiert wurde (dies entspricht in etwa 5 Gew. % HCl bezogen auf MeCl). Ergebnisse siehe Tabelle 1.

**Beispiel 3** (erfindungsgemäß):

Nachweis, daß durch eine zeitlich limitierte HCl-Dosierung zu Beginn der Reaktion die Produktivität in der Produktionsphase erhöht werden kann. Durchführung entsprechend dem Standardverfahren mit der Änderung, daß in der Induktionsphase und in den ersten 5 Minuten der Reaktion dem MeCl HCl in einer Menge von 3 l/h zugesetzt wird (dies entspricht in etwa 3% der gesamten Reaktionszeit). Ergebnisse siehe Tabelle 1.

**Beispiel 4** (erfindungsgemäß):

Analog Beispiel 3 mit der Änderung, daß 25 Minuten lang HCl (2 l/h) zudosiert wurde (dies entspricht in etwa 15% der gesamten Reaktionszeit). Ergebnisse siehe Tabelle 1.

**Beispiel 5** (erfindungsgemäß):

Nachweis, daß durch eine zeitlich limitierte HCl-Dosierung während der Reaktion die Produktivität und die Selektivität in der anschließenden Produktionsphase erhöht werden kann. Durchführung entsprechend dem Standardverfahren mit der Änderung, daß mit der HCl Dosierung (3 l/h) erst 20 Minuten nach dem Anspringen der Reaktion begonnen wurde und die Dosierung anschließend 20 Minuten lang durchgeführt wird (dies entspricht in etwa 15% der gesamten Reaktionszeit). Ergebnisse siehe Tabelle 1.

**Beispiel 6** (erfindungsgemäß):

Analog Beispiel 5 mit der Änderung, daß 40 Minuten lang HCl (1,5 l/h) zudosiert wurde (dies entspricht in etwa 25% der gesamten Reaktionszeit). Ergebnisse siehe Tabelle 1.

Tabelle 1

| Beispiel | PR2 | % Silan M2 |
|----------|-----|------------|
| 1 | 119 | 86,4 |
| 2 | 167 | 73,1 |
| 3 | 140 | 88,1 |
| 4 | 133 | 86,7 |
| 5 | 147 | 90,6 |
| 6 | 132 | 91,0 |

**Beispiel 7** (erfindungsgemäß):

**Beispiel 8** (nicht erfindungsgemäß)

Die Beispiele dienen dem Nachweis, daß durch ein Zudosieren von HCl während der Produktion die Reaktivität nicht so stark abfällt wie bei einer nicht aktivierten Reaktionsführung, und daß durch die HCl Dosierung die Dimethyldichlorsilan-Selektivität nicht nachhaltig negativ beeinflußt wird.
In Vergeich zu den Beispielen 1-6 wurde die Vorgehensweise wie folgt abgeändert:

Versuchsanlage: analog Beispiele 1-6

120g Silicium Granulat der Firma SKW-Canada Inc. mit einer Körnung im Bereich von 20 - 400 μm, werden mit 6g Kupferoxid-Katalysator, 1g Zinkoxid und 8mg Zinnpulver innig vermischt, in den Reaktor gefüllt und unter einem Stickstoffstrom von 40 l/h auf 340°C erwärmt. Anschließend werden 40 l/h Methylchlorid durch den Reaktor geleitet und die Kontaktmasse auf 395°C erwärmt. Nach einer Induktionszeit von 20 - 30 Minuten beginnt die Silanbildung, die Reaktionstemperatur wird auf 360°C reduziert und die gebildeten Methylchlorsilane aufgefangen und analysiert.
Beispiel 8: Nach jeweils 90 Minuten wird die Vorlage gewechselt und die Masse sowie die Zusammensetzung des Rohsilans bestimmt.

Beispiel 7: Nach 90 Minuten wird die Vorlage gewechselt, anschließend wird HCl in einer Menge von 1,5 l/h (dies entspricht <3 Gew.% bezogen auf MeCl) fünf Minuten lang zudosiert (dieser Zeitraum wird in den nachstehenden Tabellen nicht berücksichtigt). Nach dem Stoppen der HCl-Dosierung wird die Vorlage wieder gewechselt und die Reaktion 90 Minuten lang ohne HCl Dosierung gefahren. Darauf folgte wieder eine HCl-Dosierung wie oben angegeben.

Diese Vorgehensweise wurde mehrmals wiederholt (siehe Tabelle). D.h. während 4% der Gesamtreaktionszeit erfolgte eine HCl-Dosierung.

| Reaktionsintervall (min) HCl-Dos. vernachläßigt | Masse Rohsilan (g) Beispiel 7 | Masse Rohsilan(g) Beispiel 8 |
|---|---|---|
| 0- 90 | 36,7 | 36,9 |
| 90-180 | 43,1 | 35,0 |
| 180-270 | 42,8 | 28,7 |
| 270-360 | 39,9 | 26,2 |
| Summe | 162,5 | 126,8 |

Durch die HCl-Zudosierung wird eine Steigerung der Silanproduktion um 28 % erreicht.

| Reaktionsintervall (min) HCl-Dos. vernachläßigt | Gew.% Silan M2 Beispiel 7 | Gew.% Silan M2 Beispiel 8 |
|---|---|---|
| 0- 90 | 87,9 | 87,5 |
| 90-180 | 87,8 | 88,1 |
| 180-270 | 88,4 | 87,1 |
| 270-360 | 87,2 | 85,6 |

## Patentansprüche

1. Verfahren zur Direktsynthese von Methylchlorsilanen durch Umsetzung von Methylchlorid mit einer Kontaktmasse, welche Silicium, Kupferkatalysator, Zink-Promotoren und Zinn- und/oder Antimon-Promotoren enthält, bei dem während 1 % bis 45 % der Dauer der Produktionskampagne Chlorwasserstoff zugesetzt wird.

2. Verfahren nach Anspruch 1, bei dem die Konzentration an HCl im Methylchlorid mindestens 0,3 Gew.-%, bezogen auf die Masse an Methylchlorid beträgt.

3. Verfahren nach Anspruch 1 oder 2, bei dem im Verlauf einer Reaktionskampagne mindestens 2 einzelne HCl-Dosierungen erfolgen.

4. Verfahren nach Anspruch 3, bei dem die Dauer einer einzelnen HCl-Dosierung mindestens 5 Minuten beträgt.

## Claims

1. Process for the direct synthesis of methylchlorosilanes by reacting methyl chloride with a contact catalyst which comprises silicon, copper catalyst, zinc promoters and tin promoters and/or antimony promoters, in which hydrogen chloride is added during from 1% to 45% of the period of the production campaign.

2. Process according to Claim 1, in which the HCl concentration in the methyl chloride is at least 0.3% by weight based on the mass of methyl chloride.

3. Process according to Claim 1 or 2, in which there are at least two individual HCl additions in the course of a reaction campaign.

4. Process according to Claim 3, in which the duration of an individual HCl addition is at least 5 minutes.

**Revendications**

1. Procédé de synthèse directe de méthylchlorosilanes par transformation de chlorure de méthyle avec une masse de contact qui contient du silicium, un catalyseur de cuivre, des promoteurs de zinc et des promoteurs d'étain et/ou d'antimoine, dans lequel on ajoute de l'acide chlorhydrique pendant 1% à 45% de la durée de la campagne de production.

2. Procédé suivant la revendication 1, dans lequel la concentration en HCl dans le chlorure de méthyle s'élève à au moins 0,3% en poids, sur base de la masse de chlorure de méthyle.

3. Procédé suivant la revendication 1 ou 2, dans lequel au cours d'une campagne de réaction, on effectue au moins 2 dosages individuels de HCl.

4. Procédé suivant la revendication 3, dans lequel la durée d'un dosage individuel de HCl s'élève à au moins 5 min.